Europäisches Patentamt

European Patent Office

Office européen des brevets

(11) Publication number: **0 302 306**
**A2**

## EUROPEAN PATENT APPLICATION

(21) Application number: 88111687.5

(51) Int. Cl.⁴: **A23L 3/06**

(22) Date of filing: 20.07.88

(30) Priority: 20.07.87 US 75493

(43) Date of publication of application:
08.02.89 Bulletin 89/06

(84) Designated Contracting States:
AT BE DE FR GB IT NL

(71) Applicant: FMC CORPORATION
200 East Randolph Drive
Chicago Illinois 60601(US)

(72) Inventor: Creed, Sherman H.
2655 West San Bruno Avenue
Fresno California 93711(US)
Inventor: Croall, Milton L.
2412 Willow Court
Madera California 93637(US)

(74) Representative: Bardehle, Heinz, Dipl.-Ing. et
al
Patent- und Rechtsanwälte
Bardehle-Pagenberg-Dost-Altenburg-Frohwi-
tter-Geissler & Partner Postfach 86 06 20
D-8000 München 86(DE)

(54) Steam-air rotary sterilizing system and method.

(57) A method and apparatus for sterilizing a product
within semi-rigid containers, preferably within plastic
containers, in a reel and spiral type sterilizing sys-
tem is disclosed. A steam-air mixture at super at-
mospheric pressure is used as the heating medium
with the air in the mixture serving to preclude con-
tainer deformation. Temperature, pressure, and rate
of flow controls are provided to maintain the desired
rate of heat transfer throughout the sterilizing ap-
paratus.

FIG_1

## STEAM-AIR ROTARY STERILIZING SYSTEM AND METHOD

BACKGROUND OF THE INVENTION

Field of the Invention

The present invention pertains to sterilizing systems and methods and more particularly relates to a system of and method for processing hermetically sealed plastic containers using a steam-air mixture in a reel and spiral sterilizing apparatus for preventing container deformation and improving the container appearance when sterilizing a product within the container such as food products, liquids and pharmaceuticals.

Description of the Prior Art

Steam-air mixtures have been used in reel and spiral sterilizing systems for preventing overheating of milk in cans during the sterilizing procedure which causes the milk to scorch resulting in detrimental "burn on" on the inside surface of the cans.

Assignees' Wilbur Patent 2,536,115 discloses such a system wherein the main portion of the steam and air enters a pressure preheater at different locations. Assignees' Wilbur Patent 2,536,116 discloses a similar steam-air pressure cooker wherein the interior of the cooker is divided into three longitudinally spaced zones by baffles with the steam and the air being separately directed into each zone. Controls maintain a temperature in the inlet zone of about 225° F. and maintain a temperature of about 235° F. in the outlet zone with an intermediate zone being at an intermediate temperature. A small portion of the steam entering the cooking chamber, and a small portion of the steam-air mixture in each zone are recirculated through arcuate conduits and are then directed into the associated zones by steam injectors which are intended to maintain the steam-air mixture properly mixed.

SUMMARY OF THE INVENTION

The steam-air rotary sterilizing system and method of the present invention is provided for sterilizing products hermetically sealed in containers herein illustrated as plastic containers. A steam-air mixture is used in order to prevent the plastic containers from deforming due to excessive internal pressure in the containers. Saturated steam alone causes the plastic containers to grow and otherwise deform when the internal pressure in the containers becomes greater than that acting on the external surfaces of the containers. In order to be commercially acceptable, the steam-air mixture must be sufficiently mixed to prevent cold areas in the mixture which may provide insufficient heat to sterilize the contents of the containers.

Accordingly, in the first embodiment of the invention at least the major portion of the air in the steam-air mixture is first introduced into a steam log extending longitudinally of the sterilizer thereby assuring a proper steam-air mixture. This well mixed steam-air is then directed into the sterilizer through a plurality of longitudinally spaced conduits. Since the containers entering the inlet end portion of the sterilizer have a lower internal pressure and are cooler than those in the outlet end portion, condensation of steam in the inlet end portion is much greater than that in the outlet end portion. Thus, in accordance with another embodiment of the invention, an additional controlled source of steam may be directed only into the inlet end portion to prevent a lower temperature from occurring in the steam-air mixture at the inlet end. This addition of steam increases the rate of sterilization and thus makes possible an increased rate of flow of containers through the sterilizing system without any detrimental effect to the containers because the internal pressure of the containers is low when in the inlet end of the sterilizer.

In another embodiment of the invention a split range air pressure controller is provided for directing air into the sterilizer when the sterilizer pressure is low; and to bleed a portion of the steam-air mixture out of the sterilizer when the pressure is high. A steam temperature controller maintains the temperature therein at the desired level.

Additional embodiments of the invention use separate steam logs and air logs for directing steam and air into the sterilizer through a plurality of conduits spaced longitudinally of the sterilizer for substantially the full length of the sterilizer. Orifices in the steam conduits may be adjusted to progressively direct greater amounts of steam into the sterilizer from the feed end to the discharge end thereof, while orifices in the air conduits may be adjusted to progressively direct lesser amounts of air into the sterilizer from the feed end to the discharge end thereof, thereby compensating for the faster steam condensation at the feed end of the sterilizer.

BRIEF DESCRIPTION OF THE DRAWINGS

Figure 1 is a diagrammatic plan view of a five unit reel and spiral container sterilizing system which includes an atmospheric preheater, a pressure preheater, a sterilizer, a pressure cooler and an atmospheric cooler.

Figure 2 is an end elevation of the five unit system of Figure 1 indicating the operating temperatures within each unit.

Figure 3 is an enlarged section illustrating a conventional container transfer valve and star wheel for transferring containers between the reels and spirals of the several pressure vessels of the sterilizing system.

Figure 4 is a transverse section in perspective with parts broken away illustrating the reel and spiral and the inlet valve of the atmospheric preheater.

Figure 5 is a simplified elevation of the reel and spiral sterilizer of the invention illustrating the location of the steam-air conduit system of the first embodiment of the invention.

Figure 6 is an end view of Figure 5 illustrating the location of the steam-air log of the conduit system and further illustrating the point of entry of the steam-air into the trough of the sterilizer.

Figure 7 is a perspective of a plastic container illustrating the metal end portion thereof.

Figure 8 is a perspective of a plastic container illustrating the bottom of the plastic body of the container.

Figure 9 is a side elevation of a portion of the second embodiment of the invention which includes a conventional split range air pressure controller with two valves.

Figure 10 is an enlarged diagrammatic elevation of a portion of the second embodiment illustrating apparatus for controlling the pressure and temperature within the sterilizer with certain parts being in section.

Figure 11 is a side elevation with parts cut away illustrating a third embodiment of the invention with the air entering the sterilizer through a tubular shaft and orifices.

Figure 12 is a side elevation of a fourth embodiment of the invention illustrating separate orifices controlled steam and air conduits which direct proportional amounts of steam and air into the trough of the sterilizer.

Figure 13 is a side elevation of a fifth embodiment of the invention illustrating separate orifice controlled steam and air logs with the air log being at the upper portion of the sterilizer.

Figure 14 is an end view of Figure 13 illustrating different locations of the air log.

DESCRIPTION OF THE PREFERRED EMBODIMENT

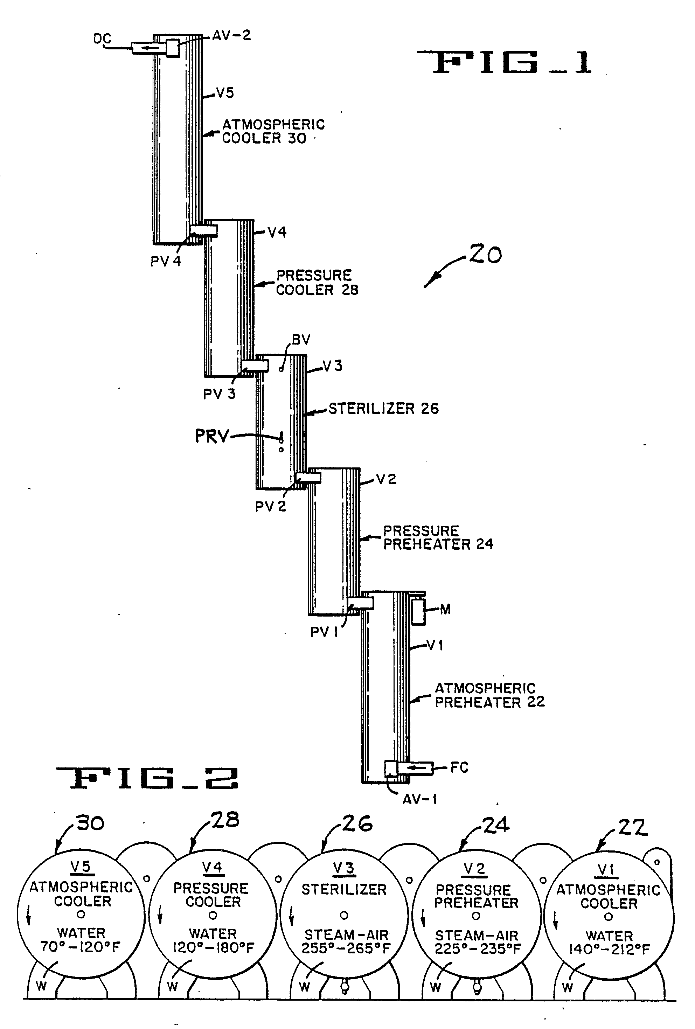

The basic components of the sterilizing system 20 (Figs. 1-4) of the present invention may include an atmospheric preheater 22 having water therein at about 140° - 212° F. (Fahrenheit); a pressure preheater 24 having a steam-air mixture therein at about 225 - 235° F.; a sterilizer 26 having a steam-air mixture therein at about 255° - 265° F.; a pressure cooler 28 having water circulating therein at about 120 - 180° F. and subjected to an overriding air pressure; and an atmospheric cooler 30 having cooling water circulating therein at about 70° - 120° F. It will be understood that all, or less than all of the above five units 22,24,26,28,30 may be used to process plastic containers C (Figs. 7 and 8) of the type used in the present invention. It will be understood that the five units may be oriented in a side-by-side relationship, rather than the generally incline relationship illustrated in Figure 1 when handling certain types of plastic containers.

Although the plastic containers as illustrated includes a plastic body and a metal wear resistant closure C', it will be understood that many other types of plastic containers may be processed in the sterilizing system 20. For example, the containers may include a plastic body sealed by a plastic closure, or may be made in the form of a one piece plastic container. Although only plastic containers have been illustrated and will be referred to throughout the specification, it will be understood that lightweight aluminum, steel, glass or other types of containers which may deform or fail due to an excessive internal pressure may be processed by the system and method of the present invention.

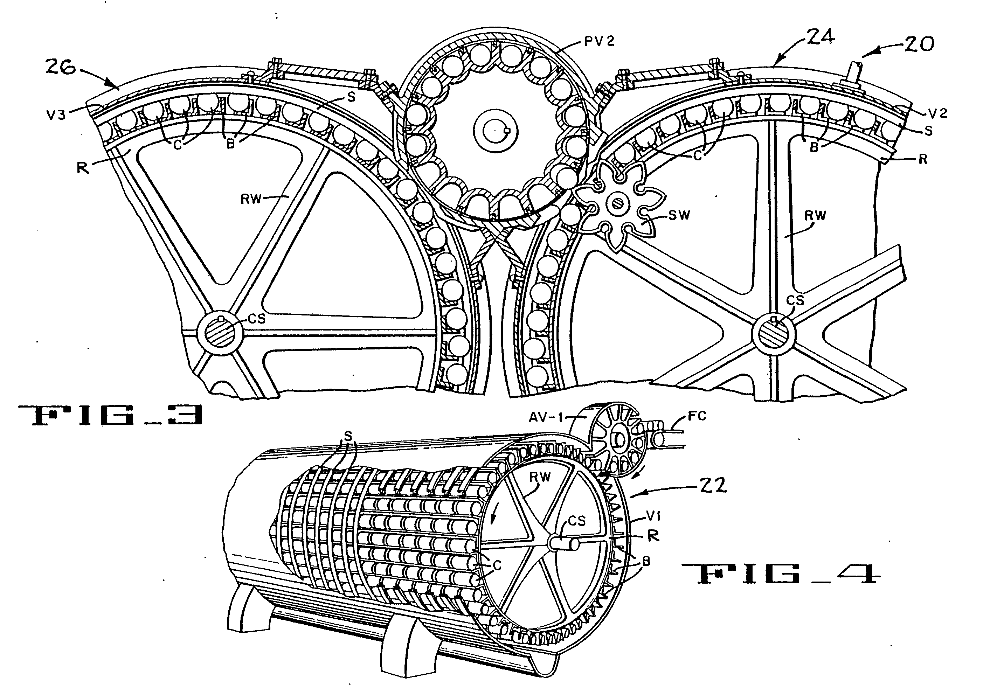

Each of the above five components 22,24,26,28,30 includes a cylindrical pressure or atmospheric vessel V1,V2,V3,V4,V5 with pairs of closed end walls W (only one being shown in Figure 2) with a stationary T-shaped spiral S (Figs. 3 and 4) secured to the inside surface of the associated vessels V1-V5. A reel R is rotatably mounted within each vessel V1-V5, and includes a central shaft CS journaled in each associated pair of closed end walls W. A plurality of reel wheels RW are keyed to each shaft CS and have a plurality of container tracks secured thereto with the tracks being illustrated as cooperating pairs of angle bars B. However, the bars may be provided with curved external surfaces to conform to the external shape of the containers C. A plurality of rotary pressure valves PV1-4 (Figs. 1 and 2) and associated star wheels SW (only one being shown in Figure 3) serve to transfer the containers between the reels R and their associated pressure valves PV. An automatic pressure relief valve PRV is provided on the sterilizer 26 and will open in the event pressure in the sterilizer is excessive. Also, a plurality of bleeder valves BV may be required on sterilizers of the reel and spiral type.

Containers C to be sterilized are directed into the atmospheric preheater 22 by a feed conveyor FC (Fig. 1) and a rotary atmospheric valve AV-1, and the sterilized containers are discharged from the atmospheric cooler 30 by a rotary valve AV-2 and a discharge conveyor DC. The several pressure and atmospheric valves and the reels are driven in the appropriate directions by a conventional variable speed drive which includes a motor M and a plurality of gears (not shown).

As thus far described, the above components of the sterilizing system 20 (Figs. 1-4) are old in the art being disclosed in assignee's patents to A.E. Pech 3,473,934 and Wilbur Patents 2,536,116 and 2,536,115.

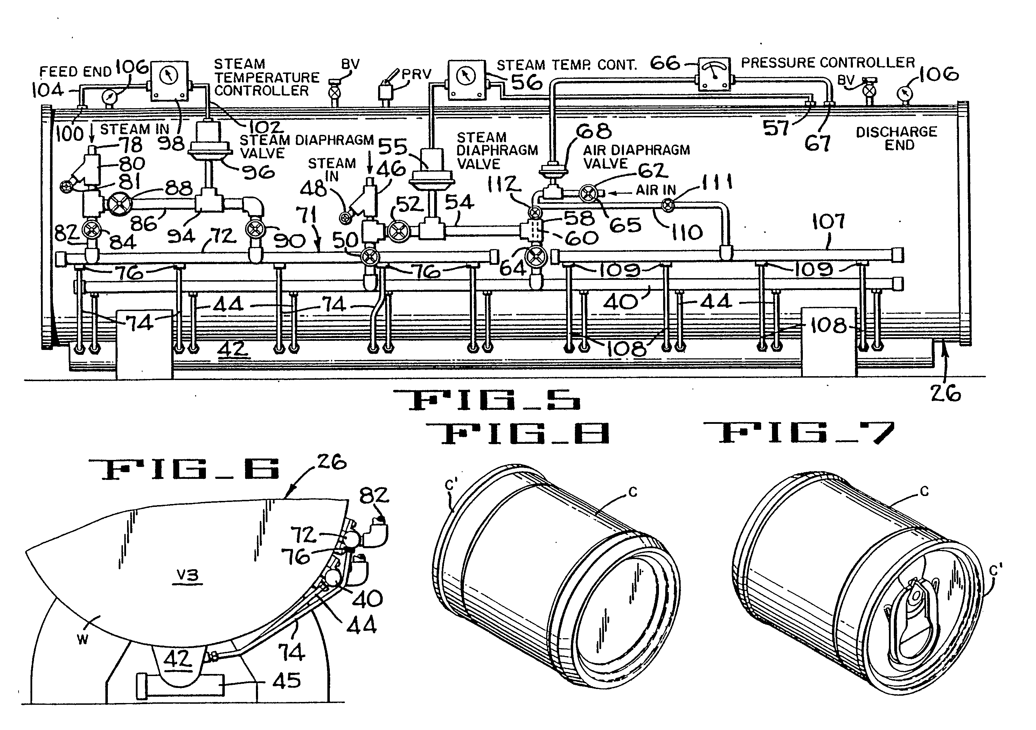

In a first embodiment of the invention the sterilizer 26 (Figs 5 and 6) is provided with a large conduit or steam-air log 40 which is connected to a trough 42 by a plurality of branch conduits 44 spaced about 2 - 2 1/2 feet apart for substantially the entire effective length of the sterilizer. The trough 42 is sealed to and communicates with the lower portion of the sterilizer. The function of the trough 42 is to collect water which condenses out of the steam when the steam contacts the colder containers C and to direct the condensate and other debris through a pressure valve 45 for discharge externally of the sterilizer.

An important feature of the invention is that the steam and air are both directed into the steam-air log 40 thereby assuring that the steam-air mixture is thoroughly mixed prior to being directed into the sterilizer. In this regard and as shown in Figure 5, steam at the desired temperature and pressure is directed into a conventional Y-shaped screen 46 which includes a valve 48 which may be opened to flush contaminates from the screen. The steam initially flows through an open valve 50 into the steam-air log 40 and trough 42 for bringing the sterilizer 26 up to sterilizing temperature before the containers C are moved therethrough. The valve 50 is then closed and a valve 52 in a branch conduit 54 is opened thereby directing steam through a first steam diaphragm valve 55 which is controlled by a steam temperature controller 56 which senses the temperature at 57. The steam then flows through a second pipe fitting 58 having an air nozzle 60 therein. A compressed non-condensible gas, hereinafter referred to as air, is directed through a conduit 62 into the air nozzle 60 and is mixed with the steam and flows through an open valve 64 into the steam-air log 40 thereby completely mixing the air and steam prior to directing the steam-air mixture into the sterilizer 26. A shut-off valve 65 may be closed to prevent discharge of air when making repairs or the like.

A conventional automatic pressure controller 66 detects the pressure in the sterilizer at 67 and adjusts a conventional diaphragm operated valve 68 to control the amount of air directed into the sterilizer through the steam-air log 42.

When the sterilizing system 20 is operating at a relatively slow rate of about 250 containers per minute which provides a gradual increase in the temperature differential between the containers C and the heating medium, the system may be operated successfully as thus far described.

However, tests conducted with the single steam-air log 40 when applied to fluid filled plastic containers C having a diameter of about 2 11 16 inches and a length of about 3 4/16 inches when driven through the sterilizer 26 at about 320 cpm (containers per minute at an average temperature of about 260° F. at the discharge end portion) indicate that the temperature at the feed end of the sterilizer was approximately 10° F. lower than that at the discharge end of the sterilizer. It is believed that this temperature differential occurs because the steam in the steam-air mixture at the inlet end of the sterilizer is condensed faster than it can be replaced since the containers are at a lower temperature at the inlet end as compared to that at the discharge end of the sterilizer. Under these circumstances it is believed that a portion of the steam-air mixture in the sterilizer flows from the discharge end toward the feed end of the sterilizer. Thus, as the steam condenses out of the steam-air mixture at the feed end and is replaced by the steam-air flow from the discharged end, the percent of air at the feed end increases thereby undesirably providing a cold area in the feed end of the sterilizer 26 which may provide insufficient heat to sterilize the contents of the containers.

In order to correct the above discussed problem and to increase the heat transfer capacity of the steam-air mixture at the feed end of the sterilizer, a pure steam system 71 may be mounted on the sterilizer 26 and includes a steam log 72 which is connected to the trough 42 by a plurality of steam conduits 74 spaced at substantially even intervals in the inlet or feed end portion of the sterilizer 26. Adjustable orifices 76 are provided in each conduit 74 and are sized so that the amount of pure steam entering the sterilizer from the steam log 72 may be progressively reduced from the feed end to the opposite end of the steam log.

Steam is directed from a source of steam (not shown) through a conduit 78, a screen 80 having a normally closed purging valve 81 therein, and into a first branch line 82 having a normally closed valve 84 therein. A second branch line 86 has a first normally opened valve 88 and a second normally open valve 90 therein, with the valve portion 94 of a second steam diaphragm valve 96 disposed between valves 88 and 90. A second steam temperature controller 98 is connected between the diaphragm valve 96 and a heat sensor 100 by conduits 102 and 104. The first and second branch conduits 82,86 communicate with the steam log 72, and it will be appreciated that both valves 88,90 may be closed when repairs are made to the steam diaphragm valve 96 or to the temperature controller 98. It is apparent that the steam temperature controller 98 regulates the steam input to the inlet end of the sterilizer which compensates for loss of steam by condensation and is effective to maintain a near constant temperature and steam-air mixture throughout the length of the sterilizer 26. It is also apparent that the air pressure controller 66 and the air diaphragm valve 68 cooperate to maintain the air pressure and the proportion of air to steam at the desired amounts. Pressure gauges 106 are provided at each end of the sterilizer to indicate the pressure within the sterilizer, and the conventional pressure relief valve PRV and bleeder valves BV are provided to prevent excessive pressures from occurring within the sterilizer 26.

Similarly, an air log 107 may be connected to the trough 42 by a plurality of spaced conduits 108 and adjustable orifices 109. Air from conduit 62 flows through a branch conduit 110 having a valve 111 therein. A valve 112 in conduit 62 upstream of the pipe fitting 58 may be partially closed to direct an additional amount of air through the air log 107 thereby adding additional air to the discharge end portion of the sterilizer 26. The adjustable orifices 109 in the conduits 108 may be adjusted to progressively increase the air flow into the steam-air mixture in the trough 42 from the feed end to the discharge end thereby providing a larger proportion of air to steam near the discharge end of the sterilizer thus preventing the hot containers from being deformed due to high internal pressure.

The adjustable orifices 76 in the steam log 72, and the orifices 109 in the air log 107, may be adjusted manually or by a programmed computer. It will also be understood that in all embodiments the rotating reel and containers supported thereon aid in maintaining the steam-air properly mixed.

As mentioned previously, tests were conducted using the type of plastic containers C illustrated in Figures 7 and 8 and sealed with metal covers C', with the metal covers engaging and being pushed by the stationary spiral S (Figs. 3-4) in response to the reel R being driven.

The following tests were conducted using a four unit reel and spiral sterilizing system which included an atmospheric preheater having a 3,024 container capacity; a sterilizer having a 2,632 container capacity; a pressure cooler having a 1,176 container capacity; and an atmospheric cooler having a 2,464 container capacity. The effective length of the reel and spirals within the several processing units determines the container capacity and accordingly the desired processing time within each unit. Each sealed container was filled with a liquid.

The duration of the test was four hours, and the atmospheric preheater 22 raised the temperature of the contents of the containers to about 210° F. before the containers were transferred into the sterilizer 26. The pressure preheater 24 was not used in this test. The sterilizer 26 (Fig. 5) was initially heated to operating temperature by steam, and after reaching the operating temperature was heated by only the steam-air mixture from the steam-air log 40. The steam temperature controller 56 (Fig. 5) was set at 261° F., and the air pressure controller 66 was set at about 6 psig. (pounds per square inch gauge) higher than that of saturated steam at 261° F., or about 27 psig. The 6 psig. overpressure indicates a theoretical air to steam ratio of about 16.4 percent. Upon completion of the four hour test, it was noted that the indicated temperature at the inlet end of the sterilizer was about 10° less than that at the discharge end of the sterilizer was 261.5° F. This temperature gradient between the inlet and outlet ends of the sterilizer indicates that more steam condenses from the steam-air mixture upon contacting the cooler containers at the feed end of the sterilizer than occurs at the discharge end as previously mentioned.

When the pressure preheater 24 (Figs. 1 and 2) is used, the heating medium in the pressure preheater 24 (Figs. 1 and 2) is a steam-air mixture which is substantially the same as that used in the sterilizer 26 (Fig. 5). However, all of the steam and air is directed into the pressure preheater through a steam-air log and trough and is controlled by a steam temperature controller and diaphragm valve; and the air is directed into the steam log and trough and is controlled by a pressure controller and air diaphragm valve in a manner substantially the same as that used in the sterilizer as above described. It will be understood, however, that a pure steam log (similar to steam log 72 - Fig. 5) and associated controls may not be required in the pressure preheater. Accordingly, the steam-air system for the pressure preheater 24 will not be described in detail. It will be understood that the steam temperature may be held at about 225° - 235° F. and that the air pressure may be controlled at about 2 psig. over that of saturated steam at 235° F.

The pressure cooler 28 (Fig. 2) receives the containers at about 260° F. from the sterilizer 26 and has cooling water circulating therethrough at between 120° - 180° F. Compressed air is directed into the pressure cooler at about 27 psig. to provide an overriding air pressure therein which is sufficient to prevent the pressure within the containers to permanently damage the hot containers as they are transferred from the sterilizer 26 to the pressure cooler 28 through valve PV3.

It will be understood that the containers C1 can expand and elongate to the extent not causing permanent damage to the containers nor causing interference with the progress of the containers through the sterilizing system 20.

The contents of the containers are cooled below the boiling point of water within the pressure cooler 28 and are then transferred by valve PV4 into and through the atmospheric coolers 30 having cooling water therein at between 70° - 120° F. The cooled containers are then transferred out of the sterilizing system 20 by the rotary atmospheric valve AV-2 (Fig. 1) and the discharge conveyor DC.

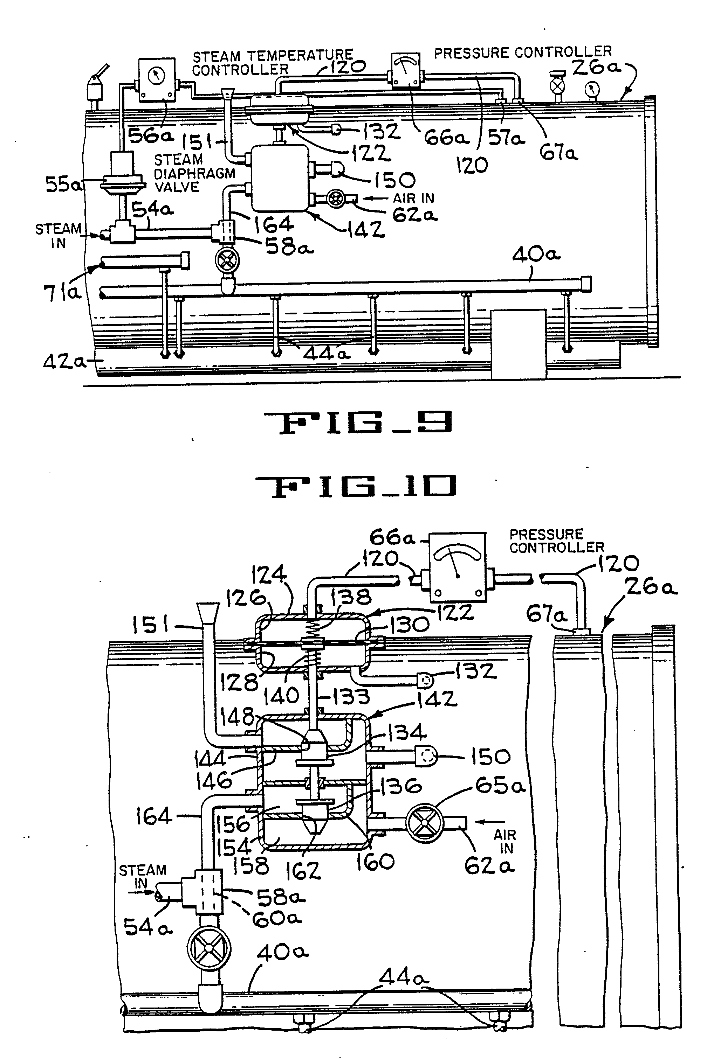

Figures 9 and 10 illustrate pertinent portions of a sterilizer 26a of the second embodiment of the invention. Components of the sterilizer 26a of the second embodiment which are the same as those described in the first embodiment will be assigned the same numerals as those given to the first embodiment followed by the letter "a". The sterilizer 26a of the second embodiment of the invention is the same as that described in the first embodiment and may be operated with or without the aid of the pure steam system 71a as described in the first embodiment. Accordingly, only the differences between the first and second embodiments will be described in detail.

As best shown in Figure 10 a pressure controller 66a is of a conventional split range type and detects the pressure within the sterilizer 26a at 67a and transmits that steam-air pressure through a conduit 120 to a double diaphragm valve 122. The double diaphragm valve 122 is conventional in the art but as diagrammatically illustrated includes a split housing 124 having an upper chamber 126 communicating with conduit 120 and separated from a lower chamber 128 by a diaphragm 130. The lower chamber communicates with the steam-air mixture within the sterilizer 26a at 132. A movable rod 133 is connected to the lower surface of the diaphragm 130 and has two valve cores 134 and 136 secured thereto. Springs 138 and 140 urge the diaphragm to its illustrated center or neutral position. A valve housing 142 includes a first or upper body portion 144 which is split into upper and lower compartments by a central wall 146 which has a port 148 therein which receives valve core 134. The upper body portion 144 communicates with the steam-air mixture in the sterilizer 26a at 150 which as illustrated is prevented from moving through port 148. When the valve core 134 is opened, steam-air from the sterilizer will flow from the sterilizer, through valve port 148 and will be vented to the atmosphere through a vent conduit 151. The valve housing 142 includes a lower body 154 which is split into an upper compartment 156 and a lower compartment 158 by a wall 160 having a port 162 therein which receives the valve core 136. The compartment 156 communicates with the air nozzle 60a disposed in pipe fitting 58a. When the valve core 136 is opened, high pressure air from a compressor (not shown) flows through conduit 62a, open valve 65a, a conduit 164 and into the pipe fitting 58a where steam from the branch conduit 54a combines with the air to direct a steam-air mixture into the steam-air log 40a and into the sterilizer 26a through conduits 44a and the trough 42a as described in regard to the first embodiment.

In operation of the second embodiment of the invention, when the steam-air pressure at 67a is detected by the pressure controller 66a as being above the desired pressure set on the pressure controller 66a, that excess pressure will momentarily move the diaphragm 130 downwardly opening or partially opening valve core 134 and causing a portion of the steam-air to flow past valve core 134 for venting to atmosphere through a conduit 151. At this time valve core 136 will be closed thereby momentarily preventing high pressure air from entering the steam-air log 40a. Although the steam will continue to flow into the steam-air log 40a for a short time, the steam temperature control 56a (Fig. 9) will assure that the temperature in the sterilizer will not rise excessively.

When the steam-air pressure at 67a is detected by the pressure controller 66a as being below the pressure set on the pressure controller 66a, the loss in pressure will cause the diaphragm valve 130 to be spring urged upwardly thereby closing or partially closing valve 134 preventing steam-air from being vented to atmosphere. At the same time, valve 136 will open or partially open causing high pressure air to be directed past valve core 136 into the steam-air log until the pressure within the sterilizer 26a reaches the pressure set on the total pressure controller 66a.

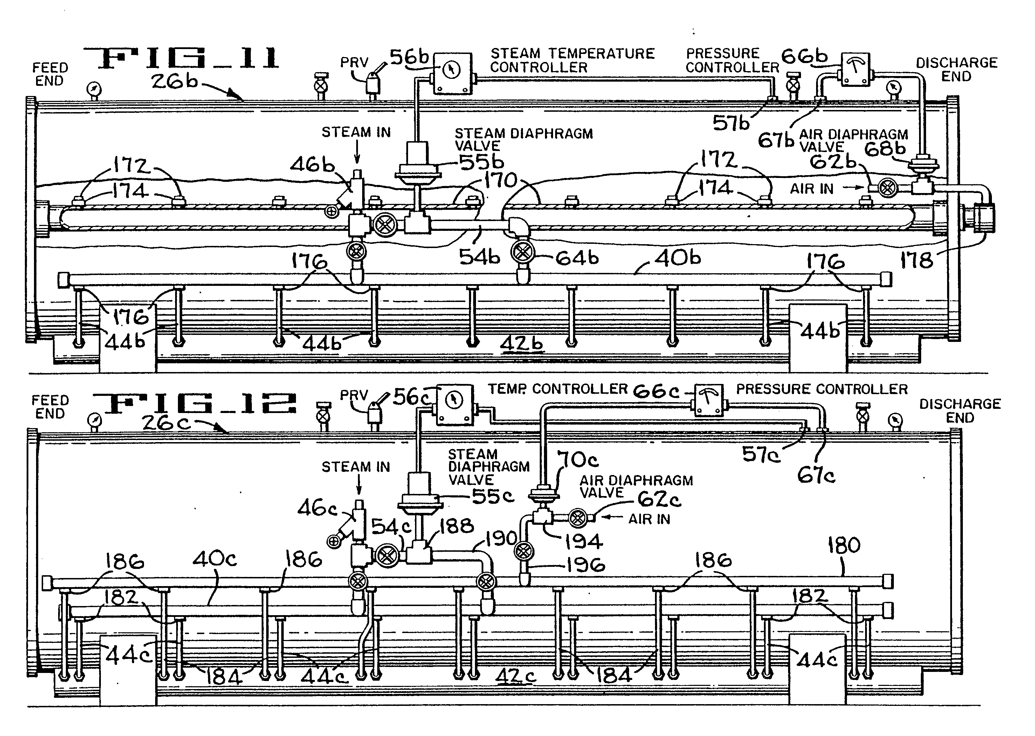

A sterilizer 26b (Fig. 11) of a third embodiment of the invention is similar to that of the first embodiment except that the air is directed into the sterilizer 26b through a tubular shaft 170 to which a reel (not shown), but similar to the reel R (Figs. 3 and 4) is secured. Since the third embodiment is similar to the first embodiment, only the components which differ from those of the first embodiment will be described in detail and equivalent parts will be assigned the same numerals followed by the letter "b". The tubular shaft 170 has a plurality of spaced air nozzles 172 and adjustable air orifices 174 secured thereto which may be adjusted to aid in maintaining a consistent steam-air mixture throughout the length of the sterilizer 26b. As mentioned previously, the steam in the steam-air mixture within the sterilizer 26b will condense faster at the feed end of the sterilizer than the discharge end due to greater condensation at the feed end because the temperature difference between the containers and the steam-air is greater at the feed end. If not properly controlled, a greater proportion of air will be present at the feed end as compared to that at the discharge end. Accordingly, the air orifices 174 may be adjusted to direct a gradually decreasing amount of air into the feed end as compared to that entering the discharge end; and steam orifices 176 in the branch conduits 44b leading from the steam log 40b to the trough 42b may be adjusted to progressively increase the amount of steam entering the sterilizer 26b from the discharge end to the feed end of the sterilizer 26b. Alternately, several of the air orifices in the feed end may be completely closed if desired.

As in the first embodiment, steam is directed from a supply source through the screen 46b and branch conduit 54b and open valve 64b into the steam log 40b. It will be understood that in the third embodiment, only steam is directed into the steam log, and that the steam is directed into the sterilizer 26b through the orifices 176, the conduits 44b and the trough 42b as previously described. Also, the temperature of the steam is controlled by the steam temperature controller 56b which senses the temperature within the sterilizer at 57b and directs appropriate signals to the steam diaphragm valve 55b.

High pressure air is directed from a source of compressed air into a conduit 62b through an air diaphragm valve 68b and into a swivel joint 178 which directs the air into the tubular shaft 170 for injection into the sterilizer 26b through orifices 174 and nozzles 172. A pressure controller 66b senses the pressure at 67b and sends appropriate signals to the air diaphragm valve 68b which controls the volume of air entering the shaft 170 and the sterilizer 26b.

A sterilizer 26c (Fig. 12) of the fourth embodiment is similar to the first embodiment except that a separate steam log 40c is provided for steam only, and an air log 180 is provided for air only. The steam log 40c is connected to the trough 42c by a plurality of conduits 44c having orifices 182 therein. Similarly, the air log 180 extends approximately the full length of the sterilizer and is connected to the trough by a plurality of conduits 184 and orifices 186. As in the previous embodiments it will be understood that the orifices may be adjusted to minimize or close the orifices at the feed end of the air log. This adjustment can be done manually or by computer control.

Steam is directed from a supply source into the screen 46c, a conduit 54c, a core 188 of a steam diaphragm valve 55c and a valved conduit 190 to the steam log 40c. The steam temperature within the sterilizer is sensed at 57c by a steam temperature controller 56c which sends appropriate signals to the diaphragm valve 55c which maintains the desired temperature within the sterilizer 26c.

High pressure air is directed into the air log 180 through a valved conduit 62c, the core 194 of the air diaphragm valve 70c and a valve conduit 196. A pressure controller 66c senses the pressure within the sterilizer 26c at 67c and transmits appropriate signals to the air diaphragm valve 70c thereby maintaining the desired pressure within the sterilizer 26c.

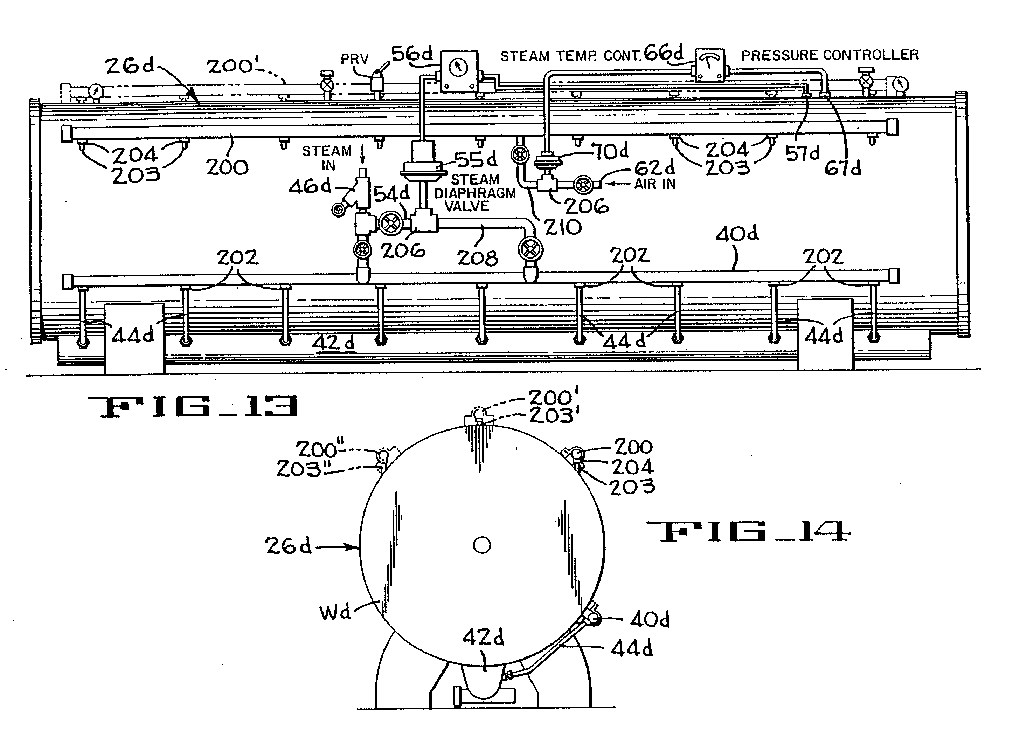

A sterilizer 26d (Figs. 13 and 14) of the fifth embodiment is similar to the first embodiment except that a separate steam log 40d is provided for steam alone, and an air log 200 is provided for transferring air directly into the upper portion of the sterilizer 26d. The steam log 40d is connected to the trough 42d by a plurality of conduits 44d having orifices 202 therein. Similarly, the air log 200 extends approximately the full length of the sterilizer and is connected directly to the upper portion of the sterilizer 26d by a plurality of conduits 203 and orifices 204.

Steam is directed from a supply source into a screen 46d, a conduit 54d, the core 206 of a steam diaphragm valve 55d, and a valve conduit 208 to the steam log 40d. The steam temperature within the sterilizer is sensed at 57d by a steam temperature controller 56d which sends appropriate signals to the diaphragm valve 55d which maintains the desired temperature within the sterilizer 26d.

High pressure air is directed into the air log 200 through a valve conduit 62d, the core 206 of the air diaphragm valve 70d and a valved conduit 210. A pressure controller 66d senses the pressure within the sterilizer 26d at 67d and transmits appropriate signals to the air diaphragm valve 70d thereby maintaining the desired pressure within the sterilizer 26d.

The orifices 204 can be manually or computer adjusted to close or adjust the amount of air discharged into the feed end as in the fourth embodiment of the invention.

Although the air log 200 is illustrated as being on the upper portion of the front of the sterilizer 26d, it will be appreciated that, if desired, the air log 200 may be positioned on the top of the sterilizer at 200' (Fig. 14) or at the rear of the sterilizer at 200".

From the foregoing description it is apparent that five embodiments of a reel and spiral sterilizing system and method has been described for processing filled and sealed plastic containers using a mixture of steam and a non-condensible gas, referred to herein as air, for preventing container deformation caused by excessive internal pressure within the containers. The several embodiments of the invention use different apparatus for compensating for the tendency of the steam-air mixture becoming inconsistent within the sterilizer during continuous operation due to more steam condensing out of the steam-air mixture at the feed end of the sterilizer than at the discharge end.

Although the best mode contemplated for carrying out the present invention has been herein shown and described, it will be apparent that modification and variation may be made without departing from what is regarded to be the subject matter of the invention.

## Claims

1. A method of sterilizing a product within containers, comprising the steps of:
moving the containers along a path into, through, and out of an elongated pressure vessel;
moving the containers along a helical path while in the pressure vessel;
directing a uniformly mixed gaseous heat treatment medium which includes steam and a non-condensible gas such as air into the pressure vessel at a superatmospheric pressure and at a sterilizing temperature; and
maintaining the temperature and pressure of the heat treatment medium at the desired levels while the containers are within the pressure vessel thereby maintaining the dimensions of the containers within reasonable limits.

2. A method according to claim 1 wherein the containers have generally cylindrical surfaces generated about central axes; wherein the containers roll about said axes during a portion of their travel through the pressure vessel; wherein the containers are formed from plastic and have wear resistant closures on one end; and additionally comprising the steps of orienting the containers with their wear resistant closures in position to be engaged by the pushing surfaces of the spiral thereby minimizing wear to the plastic surfaces of the containers.

3. A method according to claim 1 wherein the pressure vessel has a feed end portion for receiving relatively cool containers and a discharge end portion for discharging relatively hot containers, and wherein steam at the feed end portion condenses more rapidly than at the discharge end portion resulting in a higher proportion of non-condensible gas to steam at the feed end of the pressure vessel; and additionally comprising the step of:
directing an additional quantity of steam into the inlet end portion of the pressure vessel for replacing the steam lost by condensation at the inlet end and thereby maintaining substantially the same steam and non-condensible gas mixture throughout the elongated pressure vessel.

4. A method according to claim 1 wherein the pressure vessel includes a feed end, a discharge end, and separate air and steam logs extending longitudinally of the pressure vessel and communicating with the interior of the vessel; and additionally comprising the steps of directing progressively decreasing amounts of steam at the desired temperature and pressure into the pressure vessel at a plurality of intervals between said feed end and said discharge end; and directing progressively increasing amounts of the non-condensible gas at the desired pressure into the pressure vessel at a plurality of intervals between said feed and discharge ends.

5. In a method of sterilizing containers having axes of rotation, comprising the steps of:
directing air into steam externally of a pressure vessel providing a steam-air mixture;
directing the steam-air mixture into the pressure vessel at a high temperature and pressure;
continuously moving a plurality of containers into the steam-air mixture in the pressure vessel;
moving the plurality of containers while in the vessel along a helical path and rotating the containers about their axes during a portion of their travel in the vessel, said containers while moving along said helical path stirring the steam-air mixture for assisting in maintaining a consistent steam-air mixture within the vessel;
continuously bleeding a portion of the steam-air mixture from the pressure vessel while sterilizing the containers; and
moving the containers out of said vessel without significant loss of pressure therefrom.

6. A method according to claim 5 wherein the containers have wear resistant closures on one end, and the pressure vessel is a cylindrical vessel having a spiral secured to its internal surface and having a rotatable reel with a plurality of containers entering the vessel with the wear resistant closures of the containers positioned to engage the spiral which pushes the containers along the angle bars thereby minimizing frictional wear on the container closures.

7. A method of sterilizing a plurality of product filled containers having axes of rotation within a pressure cooking and cooling system which includes a plurality of elongated pressure vessels each having a stationary spiral and a rotatable reel therein with a plurality of rotary pressure valves interconnecting said pressure vessels for transferring the containers into, and out of the pressure cooking and cooling system; said method comprising the steps of:

continuously moving the containers after being preheated through a sterilizing inlet rotary pressure valve into the reel and spiral of a sterilizer maintained between about 255° - 265° F. in a steam-air heating medium at a pressure of about 23.5 - 29 psig.; and

transferring the continuously moving sterilized containers from the sterilizer through a sterilizer-pressure cooler rotary valve into the reel and spiral of a pressure cooling vessel having cooling water therein maintained at about 120° - 180° F. at a pressure of about 5 psig. for partially cooling containers;

transferring the partially cooled containers from the pressure precooler through a pressure precooler rotary valve into the reel and spiral of an atmospheric cooler vessel having cooling water therein at between about 70° - 120° F. for cooling the containers to a temperature below that which would cause the gases within the containers to exceed atmospheric pressure; and

driving the reels and rotary valves at speeds which will advance the containers at a predetermined speed through the pressure cooking and cooling system.

8. An apparatus for sterilizing products in containers, comprising:

means defining an elongated pressure vessel;

a steam-air log secured to and extending substantially the full length of said pressure vessel;

means for directing steam under pressure into said steam-air log and for directing air under pressure into said steam-air log for providing a uniformly mixed steam-air mixture;

conduit means connecting said steam-air log to said pressure vessel for directing said steam-air mixture into said pressure vessel at longitudinally spaced intervals lengthwise of the pressure vessel for assuring a uniform steam-air mixture throughout the length of the pressure vessel;

means for moving the containers along a path into, through, and out of said elongated pressure vessel;

means for moving the containers along a helical path while in the pressure vessel;

means for directing a thoroughly mixed gaseous heat treatment medium which includes steam and air into the pressure vessel at a superatmospheric pressure and sterilizing temperature; and

means for maintaining the heat treatment medium at the desired pressure and temperature while the containers are within the pressure vessel thereby sterilizing the product and precluding deformation of the plastic containers.

9. An apparatus according to claim 8 and additionally comprising means for continuously bleeding a portion of the steam-air mixture from the sterilizer while sterilizing the containers within the sterilizer.

10. An apparatus for sterilizing products in plastic containers comprising:

means defining an elongated pressure vessel having a feed end portion and a discharge end portion;

a trough connected to and communicating with said pressure vessel;

means for moving the container along a path into, through, and out of said elongated pressure vessel;

means for moving the containers along a helical path while in the pressure vessel;

means defining a steam-air log extending sustantially the full length of said pressure vessel;

means defining a plurality of conduits connected between said trough and said steam-air log and spaced at intervals between a feed and a discharge end of said pressure vessel;

means for directing a mixture of steam-air into said steam-air log for subsequent discharge into said pressure vessel at a desired temperature and pressure for sterilizing the product within the containers, said steam-air mixture having a sufficient percent of air therein to preclude deformation of the container;

first control means for directing a sufficient amount of saturated steam into said steam-air log for compensating for the excessive loss of steam at the feed end portion due to condensation for providing a substantially consistent steam-air mixture throughout the full length of said elongated pressure vessel;

second control means for maintaining the steam-air mixture at a temperature and pressure which precludes deformation of the plastic container;

said second control means additionally comprises means for venting a portion of the steam-air mixture to atmosphere when the pressure of said steam-air mixture is higher than the desired sterilizing pressure, and said second control means additionally comprises means for adding air to said steam-air mixture when the pressure of the steam-air mixture is lower than the desired sterilizing pressure.

11. An apparatus for sterilizing products in containers comprising:

means defining an elongated pressure vessel having a feed end portion and a discharge end portion;

a trough connected to and communicating with said pressure vessel;

means for moving the containers along a path into, through and out of said elongated pressure vessel;

means for moving the containers along a helical path while in the pressure vessel;

means defining a steam log extending substantially the full length of said pressure vessel;

means defining a plurality of first conduits connected between said trough and said steam log and spaced at intervals between a feed and discharge end of said pressure vessel;

means defining first adjustable orifices in said first conduits;

means defining an elongated air log;

means defining a plurality of second conduits having adjustable air orifices therein connecting said air log to said pressure vessel;

first control means for directing steam at a desired temperature and pressure through said steam log, said first conduits, and into said pressure vessel;

second control means for directing air at the desired pressure into said air log and second conduits into the interior of said pressure vessel;

said first orifices being adjusted to direct a greater amount of steam into said feed end portion than said discharge end portion of said pressure vessel; and

said air orifices being adjusted to direct a lesser amount of air into said feed end portion than said discharge end portion of said pressure vessel thereby compensating for higher losses of steam at the feed end portion due to condensation and providing a substantially consistent steam-air mixture throughout said elongated pressure vessel.

# FIG_1

DC — AV-2

V5

ATMOSPHERIC
COOLER 30

PV 4 — V4

PRESSURE
COOLER 28

20

BV — V3

PV 3

STERILIZER 26

PRV

PV 2 — V2

PRESSURE
PREHEATER 24

PV 1 — M

V1

ATMOSPHERIC
PREHEATER 22

FC

AV-1

# FIG_2

30

**V5**
ATMOSPHERIC
COOLER

WATER
70°–120°F

W

28

**V4**
PRESSURE
COOLER

WATER
120°–180°F

W

26

**V3**
STERILIZER

STEAM–AIR
255°–265°F

W

24

**V2**
PRESSURE
PREHEATER

STEAM–AIR
225°–235°F

W

22

**V1**
ATMOSPHERIC
COOLER

WATER
140°–212°F

W

FIG_3

FIG_4

FEED END 106

104

STEAM TEMPERATURE CONTROLLER

BV

PRV

STEAM TEMP. CONT. 66

PRESSURE CONTROLLER

56

BV 106

100 STEAM IN

78

80

81

82

84

88

86

94 72

90

76

44 74

74

42

102 STEAM DIAPHRAGM VALVE

96

98

STEAM IN 46

48

71

50

76

STEAM DIAPHRAGM VALVE

55

52 54

112

64

AIR DIAPHRAGM VALVE

68

58 60

62 AIR IN

65

109

40

44

108

111

110

57

67

DISCHARGE END

107

109

108

26

FIG_5

FIG_8

FIG_7

FIG_6

26

82

72

76

40

44

V3

W

42

45

74

C'

C

C'

C

C'

**FIG_9**

**FIG_10**

**FIG_11**

FEED END — DISCHARGE END

STEAM TEMPERATURE CONTROLLER

PRESSURE CONTROLLER

PRV 56b 66b

26b

57b
67b AIR DIAPHRAGM VALVE

STEAM IN — STEAM DIAPHRAGM VALVE 55b

172 — 46b — 172 — 68b

174 — 170 — 174 — 62b

AIR IN

176 — 54b — 64b — 40b — 176 — 178

176 — 44b — 44b — 42b

**FIG_12**

FEED END — DISCHARGE END

TEMP. CONTROLLER 66c — PRESSURE CONTROLLER

PRV 56c

26c

57c
67c

STEAM IN — STEAM DIAPHRAGM VALVE 55c

70c

46c — 54c — 188 AIR DIAPHRAGM VALVE 62c

190 — 194 — AIR IN

186 — 40c — 186 — 196 — 186 — 180

182 — 182

44c — 184 — 44c — 42c — 184 — 44c

EP 0 302 306 A2

FIG_13

PRV  56d  STEAM TEMP. CONT. 66d  PRESSURE CONTROLLER

26d  200'

204
203  200

STEAM
IN

46d

55d
54d

STEAM
DIAPHRAGM
VALVE

70d

62d
AIR IN

204
203

57d

67d

206

210

206  206

208

202

44d

42d

44d

40d

202

202

44d

FIG_14

200'
203'

200"
203"

200
204
203

26d

Wd

42d

40d
44d

EP 0 302 306 A2